# EUROPEAN PATENT APPLICATION

(11) **EP 3 786 130 A1**
(43) Date of publication of application: **03.03.2021**
(21) Application number: 19793275.9
(22) Date of filing: 02.04.2019
(51) Int. Cl.: C03C 27/12, B32B 17/10, B32B 37/06

(54) **VEHICULAR LIGHT-WEIGHT LAMINATED GLASS PLATE PRODUCTION METHOD**

(30) Priority: 25.04.2018 JP 2018083545
(71) Applicant: Central Glass Company, Limited, Ube-shi, Yamaguchi 755-0001 (JP)
(72) Inventor: IZUTANI, Kensuke, Matsusaka-shi, Mie 515-0001 (JP); MORI, Naoya, Matsusaka-shi, Mie 515-0001 (JP)
(74) Representative: Manitz Finsterwald Patent- und Rechtsanwaltspartnerschaft mbB
(86) International application number: PCT/JP2019/014571
(87) International publication number: WO 2019/208119

(57) **Abstract**

According to the present invention, there is provided a production method of a vehicular laminated glass plate in which two curved glass sheets are laminated to each other through an intermediate resin film, including: a step 1 of stacking the intermediate resin film between the two curved glass sheets to form a stacked body; a step 2 of degassing the stacked body; and a step 3 of integrating the stacked body into one piece by heating and pressing treatment after the degassing, wherein a minimum value of a curvature radium of the curved glass sheets is in a range of 200 to 2900 mm; wherein a thickness of at least one of the curved glass sheets is in a range of 0.1 to 2.0 mm; and wherein the production method comprises, before the step 2, a step A of deforming the intermediate resin film by raising the temperature of the intermediate resin film so as to allow the intermediate resin film to follow a surface shape of the curved glass sheet. This method suppresses a stacking failure of the glass sheets during the production of the laminated glass plate and prevents the thin glass sheets from being broken or deformed during the degassing.

## Description

### Field of the Invention

The present invention relates to a vehicular laminated glass plate, and more particularly, to a vehicular lightweight laminated glass plate in which thin curved glass sheets are laminated to each other through an intermediate resin film.

### Background Art

A laminated glass is a plate of glass in which two glass sheets are laminated to each other through an adhesive film, and is widely used as a window material for buildings and vehicles. As examples of the adhesive film, there are generally known films of polyvinyl butyral (hereinafter also referred to as "PVB") resins, ethylene-vinyl acetate copolymer (hereinafter also referred to as "EVA") resins and the like. Among laminated glasses, a curved laminated glass plate in which two curved glass sheets, each formed by bending a glass sheet, are laminated together through an adhesive film is widely used as a vehicular window material (hereinafter also referred to as "vehicular laminated glass plate"). In general, a curved laminated glass plate is obtained by bending glass sheets into a curved shape, horizontally stacking the curved glass sheets with an intermediate film interposed therebetween, and then, press-bonding the stacked glass sheets and intermediate film through heating and pressing treatment.

Various attempts have recently been made for vehicle weight reductions. Under these circumstances, weight reductions of vehicular window materials are being studied. One main technique for weight reduction of the window material is to thin the glass sheets. In association with such weight reduction of the window material, it is proposed to make the vehicle-exterior-side glass sheet thicker than the vehicle-interior-side glass sheet and mount the window material to the vehicle body with a convex curved surface of the window material being directed toward the vehicle exterior side for the purpose of compensating for the durability of the thinned glass sheets.

For example, Patent Document 1 discloses a production method of a laminated glass using a plurality of glass sheets, wherein a thickness of the thinnest one of the plurality of glass sheets is smaller than 1.6 mm; and wherein a difference in thickness between the thinnest one and thickest one of the plurality of glass sheets is 0.5 mm or greater. This patent document proposes, in order to solve problems resulting from the fact that a thin glass sheet is more likely to sag down under the influence of heat, bending of the glass sheets on a horizontally arranged mold in a state where the glass sheets are stacked together on the mold such that the thinner glass sheet is disposed in a lower position.

In addition to the above problems, there is also a problem that the sound insulation performance of the window glass material becomes deteriorated by thickness reduction of the glass sheets. For example, Patent Document 2 discloses a laminated glass which includes: a pair of glass sheets having a thickness of 0.3 to 1.8 mm are laminated to each other; and an intermediate film as an adhesive film having a pair of outer layers and a core layer interposed between the outer layers and showing a storage elastic modulus G' of 20×10⁶ Pa or higher at a frequency of 1 Hz and a temperature of 20°C, whereby the laminated glass is lightweight and attains both rigidity and sound insulation performance.

Further, Patent Document 3 discloses the use of a rigidity-improved terpolymer ionomer as an adhesive film in order to provide a window glass material with thinned glass sheets while suppressing a deterioration in the strength of the window glass material.

Patent Document 4 discloses a problem that a highly-rigid intermediate resin film used for a laminated glass with thinned glass sheets is difficult to wind in a roll shape for storage and transfer purposes. This patent document thus proposes an intermediate film for a laminated glass, having not only a high rigidity but also flexibility to be wound in a roll shape, wherein the intermediate film contains a polyvinyl acetal resin, metal atoms and a plasticizer and shows a specific storage elastic modulus.

### Prior Art Documents

### Patent Documents

Patent Document 1: Re-publication of International Application Publication No. 2012-176813
Patent Document 2: Japanese Laid-Open Patent Publication No. 2017-65966
Patent Document 3: Japanese Laid-Open Patent Publication No. 2013-28486
Patent Document 4: International Publication No. WO 2015/152241

### Summary of the Invention

### Problems to be Solved by the Invention

As mentioned above, there has recently been a demand for a vehicular lightweight laminated glass plate of reduced thickness. The laminated glass plate of reduced thickness however has the problem of insufficient sound insulation performance and strength. An attempt is being made to solve such a problem by e.g. using the adhesive film or rigidity-improved film as disclosed in Patent Documents 2 and 3. Further, it is proposed in Patent Document 4 to form the intermediate resin film by containing the metal atoms in the resin such that the intermediate resin film has not only a high rigidity but also flexibility to be wound into a roll shape.

The present inventors actually produced laminated glass plates using thin glass sheets. More specifically, the laminated glass plate was produced through the steps of arranging a glass sheet horizontally with respect to the ground and stacking an adhesive film and a thin glass sheet on the horizontally arranged glass sheet. Depending on the kind of the adhesive film, however, occasionally seen was a phenomenon in which stacking of the glass sheets became unsatisfactory due to the appearance of a large gap appeared between the two glass sheets as a result of the thin glass sheet being pushed out and displaced by the adhesive film or as a result of an end portion of the thin glass sheet being pushed up and floated by the adhesive film. When the stacked body in which such a stacking failure occurred was subjected to degassing with the application of an external pressure to the stacked body, there arose a heretofore-unseen, new problem that the thin glass sheet was cracked or distorted to cause breakage or deformation. This new problem was more likely to arise as the film was made higher in rigidity.

In view of the foregoing, it is an object of the present invention to provide a technique for, at the time of producing a vehicular lightweight laminated glass plate using thin glass sheets, suppressing a stacking failure of the thin glass sheets and preventing the thin glass sheets from becoming broken or deformed during degassing.

### Means for Solving the Problems

The present inventors made the following study on the above-mentioned problem. An intermediate resin film was interposed between two thin curved glass sheets which were arranged horizontally with respect to the ground, thereby forming a stacked body with a stacking failure occurring therein. The temperature of the thus-formed stacked body was raised. As the temperature of the stacked body was raised, the intermediate resin film was softened and deformed along a surface shape of the curved glass sheets under the own weight of the intermediate resin film or under the weight of the curved glass sheet stacked on the intermediate resin film. It has been found that it is possible to solve the above-mentioned problem by degassing the stacked body after deforming the intermediate film resin film to resolve the stacking failure in such a way. It has further been found that the above-mentioned problem is less likely to arise in the case of gently curved glass sheets such as those used for vehicle roof glass (more specifically, curved glass sheets having a minimum curvature radius of about 3000 mm or greater).

Based on these findings, the present inventors made further studies. Consequently, it has been found that: the above method is applicable to an intermediate resin film having high rigidity at room temperature; and, even when the temperature of the intermediate resin film is returned to room temperature after deformation of the intermediate resin film, it is possible to maintain the deformed shape of the intermediate resin film.

Accordingly, the present invention is directed to a production method of a vehicular laminated glass plate, the vehicular laminated glass plate comprising: two curved glass sheets; and an intermediate resin film through which the two curved glass sheets are laminated to each other, the production method comprising: a step 1 of stacking the intermediate resin film between the two curved glass sheets to form a stacked body; a step 2 of degassing the stacked body; and a step 3 of integrating the stacked body into one piece by heating and pressing treatment after the degassing, wherein a minimum value of a curvature radius of the curved glass sheets is in a range of 200 to 2900 mm; wherein a thickness of at least one of the curved glass sheets is in a range of 0.1 to 2.0 mm, and wherein the production method comprises, before the step 2, a step A of deforming the intermediate resin film by raising the temperature of the intermediate resin film so as to allow the intermediate resin film to follow a surface shape of the curved glass sheets.

### Effects of the Invention

It is possible by the present invention to, at the time of producing a vehicular lightweight laminated glass plate using thin glass sheets, suppressing a stacking failure of the thin glass sheets and preventing the thin glass sheets from becoming broken or deformed during the degassing.

### Detailed Description of the Embodiments

### 1. Explanation of Terms

The meanings of the terms used in the present specification will be explained below.

### (Storage Elastic Modulus)

In the present specification, the term "storage elastic modulus" refers to a result of measurement made on a measurement sample by a dynamic viscoelasticity measuring device (Exstar DMS7100 manufactured by Hitachi High-Tech Science Corporation). The measurement sample used is prepared by cutting an intermediate resin film into a size of about 9 mm in width × about 30 mm in length. In the measurement, the storage elastic modulus of the measurement sample is measured in a temperature range of -20°C to 100°C under the measurement conditions of a tensile mode, a frequency of 10 Hz and a temperature rise rate of 2°C/min in a state where the measurement sample is disposed in the measuring device such that a measuring length of the measurement sample is set to 10 mm.

### (Curved and Curved Surface)

The term "curved" or "curved surface" as used in the present specification means that a surface shape of a glass sheet has a curvature. A glass sheet formed with a curvature is described as being "curved" or having a "curved surface" regardless of the process of forming the curvature such as bending of a flat glass sheet, molding of a glass material into a curved sheet shape, or the like.

### (Lightweight Laminated Glass Plate)

The term "lightweight laminated glass plate" as used in the present specification refers to a glass plate using at least one glass sheet whose thickness is 2.0 mm or smaller or a glass plate provided with curved glass sheets whose total thickness is 4 mm or smaller.

### [Stacking Failure]

The term "stacking failure" as used in the present specification refers to a state where, when two curved glass sheets and an intermediate resin film are stacked together, there appears a partial gap between the two glass sheets as a result of the curved glass sheet being pushed out and displaced by the intermediate resin film, or as a result of an end portion of the curved glass sheet being pushed up and floated by the adhesive film, as mentioned above. The occurrence of a stacking failure may be judged upon the appearance of a gap between the stacked intermediate resin film and curved glass sheet. The "gap" excludes those resulting from insufficient degassing or resulting from inconsistency in shape between the two curved glass sheets. Further, the "stacking failure" does not include the case where, even when there appears a slight gap between the glass sheets during the stacking, such a gap is removed only with the application of a weak external force by pressing with operator's hand, attaching degassing equipment or the like.

### 2. Respective Constituent Parts

The respective structural members used in the present invention will be next explained below.

### (Curved Glass Sheets)

There is no particular limitation on the curved glass sheets used in the present invention as long as the curved glass sheets are two transparent curved glass sheets capable of being overlaid on each other with no gap therebetween. The glass material of the curved glass sheets can be of any kind that achieves desired optical properties etc. Examples of such a glass material include soda-lime glass, ultraviolet/infrared-absorbing colored glass and the like. Two curved sheets of different kinds of glasses may be used in combination as the curved glass sheets.

The curved glass sheets can be of any desired shape. In the case where the laminated glass plate is used for a windshield of a vehicle, previously three-dimensionally curved glass sheets are widely used. In this case, center and end portions of the glass sheets are curved intricately in vertical and horizontal directions so that the curvature radius of the glass sheets varies depending on the location. In general, the degree of curvature is greater in the end portion of the glass sheet than in the center portion of the glass sheet; and the radius of curvature is smaller in the end portion of the glass sheet. Among vehicle windshields, for example, there are known those having a complicated curved shape whose curvature radius takes a minimum value of 300 mm and a maximum value of 20000 mm. As can be seen from the studies made by the present inventors, the above-mentioned stacking failure is less likely to occur when the minimum value of the curvature radius of the curved glass sheets is in the range of 200 to 2900 mm. The minimum value of the curvature radius of the curved glass sheets may preferably be in the range of 300 to 2800 mm, more preferably 500 to 2500 mm. It is considered that the above-mentioned problem is less likely to arise in the case of using gently curved glass sheets having a minimum curvature radius exceeding 2900 mm. The vehicular lightweight laminated glass plate can however be obtained by the technique of the present invention even in the case of using curved glass sheets having a curvature radius exceeding 2900 mm.

The thickness of at least one of the curved glass sheets used in the present invention is in the range of 0.1 mm to 2.0 mm. The lower thickness limit of the at least one of the curved glass sheets may preferably be 0.3 mm or greater, more preferably 0.4 mm or greater. The upper thickness limit of the at least one of the curved glass sheets may preferably be 1.8 mm or smaller, more preferably 1.5 mm or smaller. The thickness of the other one of the curved glass sheets can be set as appropriate. From the viewpoint of weight reduction, it is preferable to set the thickness of the respective curved glass sheets such that the total thickness of the curved glass sheets used in the laminated glass plate is 4 mm or smaller.

Further, the curved glass sheets may be used by being subjected to various strengthening treatments such as chemical strengthening treatment, air-cool strengthening treatment and heat-strengthening treatment. Since the strength of the glass sheets tends to decrease with decrease in the thickness of the glass sheets, the curved glass sheets of chemically strengthened type are suitably usable.

### (Intermediate Resin Film)

The intermediate resin film is arranged between the two curved glass sheets to integrate the two curved glass sheets with each other. In the conventional method of producing the vehicular lightweight laminated glass plate, however, there occurs a stacking failure whereby the thinner one of the glass sheets becomes damaged or deformed during degassing as mentioned above. As can be seen in the present invention, the above-mentioned stacking failure problem is solved by raising the temperature of the intermediate resin film so as to soften the intermediate resin film to follow a surface shape of the curved glass sheets and deforming the softened intermediate resin film.

It is preferable in the present invention to use, as the intermediate resin film, a thermoplastic resin having a film shape at ordinary temperatures or a film containing a thermoplastic resin. Examples of the thermoplastic resin are commonly used hot-melt adhesives each containing a polyvinyl butyral (hereinafter also referred to as "PVB") resin or EVA resin. Films of an ionomer resin, a urethane resin, a cycloolefin polymer resin, an elastomer resin etc., and multilayer films formed by any combinations thereof, are also usable as the intermediate resin film. A film of ionomer resin is particularly suitably usable because the ionomer resin has a high rigidity so as to suppress a deterioration of strength caused by thickness reduction of the glass sheets. The intermediate resin film may be partially colored. The intermediate resin film may have a sound shielding function layer sandwiched between thermoplastic resin layers. The intermediate resin film may have a thickness inclined. The intermediate resin film may have a surface subjected to embossing. The intermediate resin film may be of rigidity improved type. An ultraviolet absorber, an antioxidant, an anti-static agent, a thermal stabilizer, a coloring agent and an adhesion modifier may be added as appropriate to the resin film. In particular, the resin film containing near-infrared absorbing fine particles is suitably usable so as to impart high heat shielding performance.

The higher the storage elastic modulus of the intermediate resin film, the more difficult the intermediate resin film is to curve. The lower the storage elastic modulus of the intermediate resin film, the easier the intermediate resin film is to curve. The present invention is particularly useful for the case where the intermediate resin film is difficult to follow the curved surface shape of the curved glass sheets at room temperature. For example, the storage elastic modulus of the intermediate resin film at 20°C may preferably be in the range of 5×10⁸ to 3×10⁹ Pa, more preferably 7×10⁸ to 2×10⁹ Pa.

There is no particular limitation on the thickness of the intermediate resin film. It is generally considered that the higher the thickness of the intermediate resin film, the higher the rigidity of the intermediate resin film. The thickness of the intermediate resin film is thus preferably set to a degree that, in a stacked state, the intermediate resin film can follow the curved surface shape of the curved glass sheets. It is further preferable that the intermediate resin film has an adequate thickness in terms of the visibility of the curved laminated glass plate. For example, the thickness of the intermediate resin film may be in the range of 500 to 1500 µm.

In the present invention, the intermediate resin film is deformed by raising the temperature of the intermediate resin film and thereby softening the intermediate resin film to follow the surface shape of the curved glass sheets as mentioned above. After the deformation, the intermediate resin film has a curved shape following the surface shape of the curved glass sheets. The intermediate resin film is not bonded to the curved glass sheets until the execution of the after-mentioned step 3 or step B in the present invention. The curved shape of the intermediate resin film after the deformation is maintained even when the temperature of the intermediate resin film is lowered from the deformation temperature to about room temperature (e.g. to about 10 to 28°C).

It is considered that, in the case where the intermediate resin film is deformed and then returned to a temperature below the softening temperature (e.g. to about room temperature), the storage elastic modulus of the intermediate resin film at a certain temperature degree does not significantly change before and after the deformation. Thus, the storage elastic modulus of the intermediate resin film after the deformation may preferably be in the range of 5×10⁸ to 3×10⁹ Pa at 20°C.

### (Vehicular Lightweight Laminated Glass Plate)

The curved laminated glass plate obtained according to the present invention has a structure in which the two curved glass sheets are laminated together through the intermediate resin film. The curved laminated glass plate obtained according to the present invention is characterized in that: the minimum value of the curvature radius of the curved glass sheets is in the range of 200 to 2900 mm; and the thickness of at least one of the curved glass sheets is in the range of 0.1 to 2.0 mm, and is lightweight as compared to a conventional vehicular laminated glass plate. In the case where the curved glass sheets used are of different thicknesses, it is preferable that the thinner one of the curved glass sheets is located on the vehicle interior side of the laminated glass plate in terms of the strength.

According to a suitable embodiment of the present invention, the vehicular lightweight laminated glass plate has a structure in which the two curved glass sheets are laminated together through the intermediate resin film, wherein the minimum value of the curvature radius of the curved glass sheets is in the rage of 200 to 2900 mm; wherein the thickness of at least one of the curved glass sheets is in the range of 0.1 to 2.0 mm; and wherein the storage elastic modulus of the intermediate resin film is in the range of 5×10⁸ to 3×10⁹ Pa at 20°C.

There is no particular limitation on the optical properties of the vehicular lightweight laminated glass plate. The optical properties of the vehicular lightweight laminated glass plate can be determined as appropriate according to the purpose of use of the laminated glass plate. In the case where the laminated glass plate is used for a windshield of a vehicle, for example, it is preferable that the laminated glass plate has a visible light transmittance of 70% or higher so as to ensure driver's visibility.

The vehicular lightweight laminated glass plate may have a functional film. It is feasible to use two intermediate resin films and sandwich the functional film between these two intermediate resin films, or to sandwich the functional film between the curved glass sheet and the intermediate resin film. Examples of the functional film are a heat insulating film, an ultraviolet shielding film, a liquid crystal film, a phase difference film, a light guide film, a light diffusion film, a sound insulating film, a conductive film, a design film, a light control film etc.

### 3. Production Method of Vehicular Lightweight Laminated Glass Plate

The production method of the vehicular lightweight laminated glass plate, in which the two curved glass sheets are laminated together through the intermediate resin film, according to the present invention includes the following steps:
a step 1 of stacking the intermediate resin film between the two curved glass sheets to form a stacked body;
a step 2 of degassing the stacked body; and
a step 3 of integrating the stacked body into one piece by heating and pressing treatment after the degassing,
wherein the minimum value of the curvature radius of the curved glass sheets is in the range of 200 to 2900 mm;
wherein the thickness of at least one of the curved glass sheets is in the range of 0.1 to 2.0 mm; and
wherein the production method includes, before the step 2, a step A of deforming the intermediate resin film by raising the temperature of the intermediate resin film so as to allow the intermediate resin film to follow a surface shape of the curved glass sheets.

### (Step A)

The step A is a step of, before the step 2, deforming the intermediate resin film by raising the temperature of the intermediate resin film so as to allow the intermediate resin film to follow the surface shape of the curved glass sheets. A stacking failure occurs when the intermediate resin film does not follow the surface shape of the curved glass sheets. Unless the stacking failure is resolved, there arises a need to attach degassing equipment or instrument to the stacked body during the degassing in the step 2; and there arises a problem that the curved glass sheet may be broken or distorted during the degassing of the stacked body. The step A is thus executed in order to resolve the stacking failure before the step 2. The step A may be executed a plurality of times as required.

In the step A, the temperature of the intermediate resin film is set to a temperature degree at which the intermediate resin film can be softened to a deformable state and does not show adhesion. It is feasible to appropriately set the temperature of the intermediate resin film in the step A depending on the kind of the intermediate resin film. For example, the temperature of the intermediate resin film in the step A may be set higher than or equal to 35°C and lower than 65°C. Preferably, the lower limit of the temperature of the intermediate resin film in the step A may be 40°C or higher; and the upper limit of the temperature of the intermediate resin film in the step A may be 55°C or lower.

There is no particular limitation on the process of deforming the intermediate resin film in the step A. It is convenient to allow the intermediate resin film to be deformed under the own weight of the intermediate resin film or under the weight of the curved glass sheet provided in the stacked body. For example, the intermediate resin film can be deformed under its own weight by arranging the curved glass sheet, or a mold shaped according to the surface shape of the curved glass sheet, horizontally with respect to the ground or workbench, stacking the intermediate resin film horizontally on the curved glass sheet or mold, and then, raising the temperature of the intermediate resin film to soften the intermediate resin film. In such a case, it is preferable to arrange the curved glass sheet or mold such that the intermediate resin film can be stacked on a convex surface or concave surface of the curved glass sheet or mold. The step A may preferably be executed after the step 1 because, in this case, the deformation of the intermediate resin film is promoted by the weight of the curved glass sheet stacked on the intermediate resin film.

It is preferable that the step A includes a step of heating the intermediate resin film and thereby controlling the storage elastic modulus of the intermediate resin film to within the range of 1×10⁷ to 3.5×10⁸ Pa. When the storage elastic modulus of the intermediate resin film is higher than 3.5×10⁸ Pa, the intermediate resin film may be difficult to deform due to insufficient softening or may not be able to maintain its deformed curved shape after returned to room temperature. The lower limit of the storage elastic modulus of the intermediate resin film is not particularly limited. However, the intermediate resin film may become easily bonded to the curved glass sheets when the storage elastic modulus of the intermediate resin film is lower than 1×10⁷ Pa. The storage elastic modulus of the intermediate resin film may preferably be controlled to within the range of 1.5×10⁷ to 3×10⁸ Pa.

There is no particular limitation on the heating means. When the intermediate resin film is heated too much, the intermediate resin film is bonded to the curved glass sheets so that there is likely to occur a degassing failure in the subsequent step 2. It is thus preferable to use a device capable of heating the intermediate resin film to a temperature degree at which the intermediate resin film does not show adhesion. The heating can be done by blowing warm air to the intermediate resin film, by leaving the intermediate resin film in a temperature-controlled environment or by using an electric furnace or heater, a heatable roller, a thermostatic bath etc.

The step A can be executed before the initiation of the step 1, or in the middle of stacking during the step 1. The step A can alternatively be executed, after the stacked body with a stacking failure is formed in the step 1, to resolve the stacking failure. It is however preferable to execute the step A during or after the step 1. This is because the intermediate resin film in a softened state, when lifted up or moved so as to be stacked on the curved glass sheet, may be further deformed to lose its curved shape obtained in the step A. In order to prevent such unintended deformation, the temperature of the intermediate resin film needs to be lowered to a temperature degree at which the intermediate resin film does not get deformed. This however results in a workability deterioration. In the case where the step A is executed during or after the step 1, it is feasible to execute the step A in a state that one of the curved glass sheets and the intermediate resin film are stacked to each other, and then, stack the other curved glass sheet on the intermediate resin film, or feasible to execute the step A after stacking the intermediate resin film between the two curved glass sheets.

On the other hand, once the intermediate resin film is deformed in the step A, the deformed curved shape of the intermediate resin film is maintained as mentioned above so that there is no recurrence of the stacking failure even when the temperature of the intermediate resin film is returned to about room temperature. It is consequently possible by executing the step 1 after obtaining the deformed intermediate resin film in the step A to produce the vehicular laminated glass plate by means of a conventional vehicular laminated glass plate production line. When the temperature of the intermediate resin film is raised in the step A, there may be a case that it becomes difficult to perform operation for the degassing step depending on the temperature or degassing process. It is thus preferable to execute the step 1 or step 2 after the temperature of the deformed intermediate resin film is set to room temperature. It is particularly preferable to set the temperature of the intermediate resin film to about room temperature before the step 2. Herein, the term "room temperature" generally refers to 10 to 20°C and may preferably refer to 10 to 25°C.

### (Step 1)

The step 1 is a step of stacking the intermediate resin film between the two curved glass sheets to form the stacked body. The stacking can be done by stacking, on one of the curved glass sheets, the intermediate resin film and the other curved glass sheet in this order. The stacking can alternatively be done by laying the respective structural members in order against a jig etc. It is preferable to avoid as much as possible the application of an external force etc. to the curved glass sheets during the stacking in order to prevent the curved glass sheets from becoming broken or distorted.

Although the step A can be executed before the step 1 or can be executed during or after the step 1, it is preferable to execute the step A during or after the step 1 as mentioned above. In the stacked body obtained in the step 1, the respective structural members are merely overlaid on one another and are not joined together into one piece.

### (Step 2)

The step 2 is a step of degassing the stacked body. Since the step A is executed before the initiation of the step 2 in the present invention, the stacked body to be degassed in the step 2 has no stacking failure. The degassing can be done by a known process such as, for example, forcing out air from between the respective structural members by means of rollers or reducing the pressure between the respective structural members under decompression. Since the curved glass sheets decrease in strength with decrease in thickness, there may occur cracks etc. in the curved glass sheets during the degassing of the stacked body by the rollers depending on the thickness or shape of the curved glass sheets. It is thus preferable in the step 2 to degas the stacked body by decompression between the respective structural members.

In the case of utilizing the above-mentioned decompression technique as the degassing process, the stacked body can be degassed by attaching a tube of rubber resin to a peripheral part of the stacked body and exhausting air from a nozzle of the tube, or by placing the stacked body in a vacuum bag and exhausting air from a nozzle of the vacuum bag.

### (Step 3)

The step 3 is a step of integrating the stacked body into one piece by heating and pressing treatment after the degassing. The stacked body is integrated into one piece by heating the stacked body in a pressurized environment. In this step, it is convenient and preferable to use a general-purpose autoclave. In the case of using the autoclave, the integration treatment is performed by setting the pressure and temperature of the autoclave as appropriate according to the kind of the intermediate resin film. When the intermediate resin film of PVB resin or EVA resin is used, for example, the integration treatment can be performed by heating the autoclave to a maximum temperature of 100 to 150°C and maintaining the autoclave at or around this temperature for 20 to 40 minutes.

In such a case, the pressing operation is done within the pressure range of 0.9 to 1.5 MPa. The heating operation and the pressing operation may be done one after another or simultaneously with each other. The pressing operation may be done from the middle of the heating operation. A heatable press machine etc. may be used unless the glass sheets are damaged.

### (Film Removing Step)

In the case where an area of the intermediate resin film is larger than an area of the curved glass sheets, the intermediate resin film protrudes from the curved glass sheets. In the state that the intermediate resin film protrudes from the curved glass sheets, the decompression and degassing of the stacked body may be interfered with by a protruding redundant portion of the intermediate resin film. Further, the protruding redundant portion of the intermediate resin film may go around and become adhered to a surface of the glass sheet so as to cause an appearance defect of the laminated glass plate. The production method may thus preferably include, before the step 2, a step of removing the redundant portion of the intermediate resin film protruding through an edge of the stacked body. The redundant film removal can be done by a known technique. For example, the redundant portion of the intermediate resin film can be cut away by means of a cutter etc. For ease of removing the redundant portion of the intermediate resin film, it is preferable to execute this step in a state that the intermediate resin film is softened by temperature rise.

### (Pre-Bonding Step)

When the stacked body is integrated into one in the step 3, the bubbling of air may occur in the stacked body due to evaporation of water remaining in the stacked body or any component contained in the intermediate resin film by the heating. Furthermore, the air may enter between the curved glass sheet and the intermediate resin film depending on the heating and pressing conditions. It is thus preferable to suppress or remove such air by performing heating and pressing treatment under more moderate conditions where the intermediate resin film shows some adhesion, than those in the step 3. This treatment operation is referred to as "pre-bonding" in the present specification.

It is preferable in the pre-bonding step to heat the stacked body such that such that the maximum heating temperature is higher than or equal to the glass transition temperature of the intermediate resin film plus 10°C and is lower than or equal to the maximum temperature of the step 3 minus 10°C. The heating temperature may preferably be 70°C to 100°C. In other words, the production method may preferably include a step

B of performing pre-bonding treatment on the stacked body by heating the stacked body at 70 to 100°C during or after the step 2 and before the step 3. The heating temperature may be 80 to 100°C. In the step B, it is preferable to raise the temperature of the stacked body to 70 to 100°C by heating and then maintain this heating temperature for about 10 to 30 minutes. In the case where the step B is executed using an autoclave, it is preferable to press the stacked body within the pressure range of 0.1 to 0.5 MPa and maintain such a pressing state for about 30 to 60 minutes. The pre-bonding step may be executed a plurality of times as required. In this case, the heating and pressing conditions of the respective pre-bonding treatments can be the same or different.

### Examples

The present invention will be described in more detail below by way of the following Example and Comparative Example.

### 1. Evaluations of Intermediate Resin Films

Using an intermediate resin film and curved glass sheets, the occurrence or non-occurrence of a stacking failure was tested. Further, the storage elastic modulus of the intermediate resin film was measured. The intermediate resin film used was a film A (available as Saflex Standard Clear PVB RF41 from Eastman Chemical Company) or a film B (available as Saflex High Impact, Hurricane and Storm PVB DG41 from Eastman Chemical Company). The curved glass sheets used were soda-lime glass sheet. The soda-lime glass sheets were selected from those of soda-lime glasses A to D having different sizes, minimum curvature radii and thicknesses as shown in TABLE 1. In the case where two glass sheets of 0.7 mm thickness were used, for example, the thickness of the glass sheets was indicated as "0.7/0.7".

### (Storage Elastic Modulus of Intermediate Resin Film)

The storage elastic modulus of the film A, B was measured by the following method. Each of the films was first cut into a size of about 9 mm width × about 30 mm length and utilized as a measurement sample. The measurement sample was tested with a dynamic viscoelasticity measuring device (Exstar DMS7100 manufactured by Hitachi High-Tech Science Corporation). In the measurement test, the measurement sample was disposed in the measuring device such that a measuring length of the measurement sample was set to 10 mm. In this state, the storage elastic modulus of the measurement sample was measured in a temperature range of -20°C to 100°C under the measurement conditions of a tensile mode, a frequency of 10 Hz and a temperature rise rate of 2°C/min.

Since the temperature of the film was set to 20°C, 40°C and 70°C in the after-mentioned stacking failure evaluation test, the storage elastic modulus of the film was measured at 20°C, 40°C and 70°C. The measurement results are shown in TABLE 1.

### (Evaluation of Stacking Failure)

The occurrence of the stacking failure was evaluated by the following test. First, one curved glass sheet, the intermediate resin film and another curved glass sheet were stacked in this order on a test stage such that convex surfaces of the curved glass sheets were directed upward. Next, the intermediate resin film was deformed by raising the temperature of the intermediate resin film to follow a surface shape of the curved glass sheets. At this time, the temperature of the intermediate resin film was set to 20°C, 40°C or 70°C. The temperature was set to 20°C by placing the intermediate resin film under room temperature. The temperature was set to 40°C or 70°C as desired by placing the intermediate resin film in a thermostat.

Then, the appearance or disappearance of a gap between the curved glass sheets was observed. The stacking failure evaluation result was indicated as: "⊚" when there was no gap appearing between the curved glass sheets; "○" when a little gap appeared but was removed with the application of a weak pressing force; "×" when a large gap appeared and was not removed unless a strong pressing force was applied; and "bonded" when the intermediate resin film was bonded to the curved glass sheets. The evaluation results are shown in TABLE 1. The stacking failure evaluation result "O" means that, even though a little gap appeared, it was possible to remove such a gap by mounting the stacked body to the degassing equipment or lightly decompressing the stacked body.

**TABLE 1**

| Intermediate Resin Film | | | Stacking Temperature (°C) | Glass A | Glass B | Glass C | Glass D | |
|---|---|---|---|---|---|---|---|---|
| Kind | Temperature (°C) | Storage Elastic Modulus (Pa) | | 300×300 | 262×328 | 300×300 | 300×300 | Size (mm) |
| | | | | 1000 | 1150 | 3000 | 3000 | Curvature Radius (mm) |
| | | | | 0.7/0.7 | 2.0/2.0 | 0.7/0.7 | 2.0/2.0 | Thickness (mm) |
| Film A | 20 | 3.5×10⁸ | 20 | ○ | ⊚ | ⊚ | ⊚ | |
| | 40 | 1.0×10⁷ | 40 | ⊚ | ⊚ | ⊚ | ⊚ | |
| | 70 | 1.3×10⁶ | 70 | bonded | bonded | bonded | bonded | |
| Film B | 20 | 9.5×10⁸ | 20 | × | × | ○ | ○ | |
| | 40 | 1.2×10⁸ | 40 | ⊚ | ⊚ | ⊚ | ⊚ | |
| | 70 | 1.9×10⁶ | 70 | bonded | bonded | bonded | bonded | |

### 2. Production of Vehicular Laminated Glass Plate

### [Example 1]

A vehicular laminated glass plate was produced using a sheet of the film B as the intermediate resin film and sheets of the glass A as the curved glass sheets.

### (Step 1)

The curved glass sheet, the intermediate resin film and the curved glass sheet were horizontally stacked in this order, with convex surfaces of the curved glass sheets being directed upward, to form a stacked body.

### (Step A)

The thus-formed stacked body was placed in a thermostat whose temperature was set to 40°C. In the thermostat, the stacked body was arranged horizontally with a convex surface of the stacked body being directed upward, and held for about 20 seconds. As the temperature of the intermediate resin film was raised, the intermediate resin film was softened and then deformed under the weight of the curved glass sheet stacked on the intermediate resin film to follow the curved surfaces of the curved glass sheets.

### (Step 2)

The stacked body obtained in the step A was put in a vacuum bag, and degassed by exhausting the air from an exhaust nozzle of the vacuum bag.

### (Step B)

The stacked body after the degassing was placed in an autoclave and subjected to pre-bonding. In this pre-bonding step, the temperature of the autoclave was set to 90°C; the pressure of the autoclave was set to 0.25 MPa; and the temperature retention time was set to 20 minutes.

### (Step 3)

Subsequently, the stacked body was subjected to heating and pressing treatment by setting the temperature of the autoclave to 135°C, setting the pressure of the autoclave to 1 MPa and setting the temperature retention time to 30 minutes, whereby the stacked body was integrated into one piece. There was thus obtained the vehicular laminated glass plate.

### [Comparative Example 1]

The step 1 was executed in the same manner as in Example 1, except that the stacked body was placed in a thermostat whose temperature was set to 20°C as in the step A. At this time, the softening of the intermediate resin film was insufficient so that the intermediate resin film was not deformed to follow the surface shape of the curved glass sheets. The thus-formed stacked body had a gap as a stacking failure. The gap was removed by pressing end portions of both of the curved glass sheets. In this state, the curved glass sheets was fixed by applying a heat-resistant tape. After that, the steps 2 and 3 were executed in the same manner as in Example 1. As the convex surfaces of the curved glass sheets were pushed down and deformed, there was obtained a laminated glass plate in which the curved glass sheets and the intermediate resin film were laminated together with the curvature radius of the curved glass sheets being made greater than its original curvature radius.

It is apparent from the above results that, even in the case where the thin glass sheets were used, it was possible by the present invention to suppress the stacking failure. On the other hand, the stacking failure occurred in Comparative Example 1. When the step 2 was executed after the stacking failure was resolved by the application of a large external force, there occurred deformation of the curved glass sheets so that the curved shape of the curved glass sheets was impaired. When the step 3 was executed in this state, the curved glass sheets was kept deformed. Although the glass sheets having a small size of less than 1 m in width were used in Comparative Example 1, there may be a case where glass sheets having a large size of 1 mm or more in width are used for vehicular window materials. In such a case, it is assumed that, when there occurs deformation of the glass sheets as in Comparative Example 1, the glass sheets would be broken in the step 2 or step 3.

## Claims

1. A production method of a vehicular laminated glass plate, the vehicular laminated glass plate comprising: two curved glass sheets; and an intermediate resin film through which the two curved glass sheets are laminated to each other, the production method comprising:
a step 1 of stacking the intermediate resin film between the two curved glass sheets to form a stacked body;
a step 2 of degassing the stacked body; and
a step 3 of integrating the stacked body into one piece by heating and pressing treatment after the degassing,
wherein a minimum value of a curvature radius of the curved glass sheets is in a range of 200 to 2900 mm;
wherein a thickness of at least one of the curved glass sheets is in a range of 0.1 to 2.0 mm, and
wherein the production method comprises, before the step 2, a step A of deforming the intermediate resin film by raising the temperature of the intermediate resin film so as to allow the intermediate resin film to follow a surface shape of the curved glass sheets.

2. The production method of the vehicular laminated glass plate according to claim 1, wherein the step A comprises heating the intermediate resin film so as to control a storage elastic modulus of the intermediate resin film to within a range of 1×10⁷ to 3.5×10⁸ Pa.

3. The production method of the vehicular laminated glass plate according to claim 1 or 2, wherein the step A is executed during or after the step 1.

4. The production method of the vehicular laminated glass plate according to any one of claims 1 to 3, wherein, in the step 2, the stacked body is degassed by decompression.

5. The production method of the vehicular laminated glass plate according to any one of claims 1 to 4, wherein a storage elastic modulus of the intermediate glass film is in a range of 5×10⁸ to 3×10⁹ Pa at 20°C.

6. The production method of the vehicular laminated glass plate according to any one of claims 1 to 5, wherein the production method further comprises, before the step 2, a step of removing a redundant portion of the intermediate resin film protruding through an edge of the stacked body.

7. The production method of the vehicular laminated glass plate according to any one of claims 1 to 6, wherein the production method further comprises, during or after the step 2 and before the step 3, a step B of performing pre-bonding treatment on the stacked body by heating the stacked body at 70 to 100°C.

8. The production method of the vehicular laminated glass plate according to any one of claims 1 to 7, wherein the step 1 or step 2 is executed after the temperature of the intermediate resin film after the deforming is set to room temperature.

9. A vehicular lightweight laminated glass plate, comprising:
two curved glass sheets; and
an intermediate resin film through which the two curved glass sheets are laminated to each other,
wherein a minimum value of a curvature radius of the curved glass sheets is in a range of 200 to 2900 mm;
wherein a thickness of at least one of the curved glass sheets is in a range of 0.1 to 2.0 mm, and
wherein a storage elastic modulus of the intermediate glass film is in a range of 5×10⁸ to 3×10⁹ Pa at 20°C.
